# EUROPEAN PATENT APPLICATION

(11) **EP 2 364 856 A2**
(43) Date of publication of application: **14.09.2011**
(21) Application number: 11156366.4
(22) Date of filing: 01.03.2011
(51) Int. Cl.: B41J 3/407

(54) **Tape printer, method for controlling tape printer, and program product**

(30) Priority: 12.03.2010 JP 2010055461
(71) Applicant: Seiko Epson Corporation, Shinjuku-ku, Tokyo 163-0811 (JP)
(72) Inventor: Murayama, Noriaki, Nagano 392-8502 (JP)
(74) Representative: MERH-IP Matias Erny Reichl Hoffmann

(57) **Abstract**

A tape printer 1 having a large-size printing function of dividing an enlarged printing image which is larger than the tape width W of a long tape into a plurality of images, sequentially printing the images on a plurality of tape parts, arranging a plurality of printed labels formed by the printing parallel to each other in a tape width direction, and thereby forming the enlarged printing image, includes: a tape width detecting section 19 detecting the tape width W; a layout calculating section 30 calculating enlargement layout information indicating the layout of a character or graphics forming the enlarged printing image; a margin determining section 30 calculating the widths of an upper margin Tm and a lower margin Bm of the enlarged printing image in the tape width direction based on the enlargement layout information calculated by the layout calculating section 30 and determining whether or not each width is equal to or greater than the tape width W; an image data generating section 30 generating image data of the enlarged printing image based on the enlargement layout information; and a printing section sequentially printing, on one or more than one tape part, the image data of the enlarged printing image other than a tape part corresponding to a margin which is equal to or greater than the tape width W based on the determination result obtained by the margin determining section.

## Description

### BACKGROUND

### 1. Technical Field

The present invention relates to tape printers, methods for controlling a tape printer, and program products.

### 2. Related Art

In the past, a tape printer having a so-called "large-size printing function" of forming a printing image by pasting a plurality of tape parts (tape pieces) together, the tape parts on each of which part of a printing image that is larger than a tape width is printed, has been known (for example, JP-A-11-157136). The tape printer having this large-size printing function can form a printing image, that is, an enlarged printing image by arranging printed tape parts on each of which part of the printing image is printed, the tape parts having the same length, parallel to each other in the tape width direction.

Furthermore, an image data generating apparatus (a tape printer) which deletes, with a large-size printing function, non-printing image regions which are a front end part and a back end part in the tape length direction, the front end part and the back end part in which no printing image is present, has been disclosed (JP-A-2008-283647). According to such an image data generating apparatus, it is possible to reduce use of tape in the tape length direction in large-size printing.

However, in the large-size printing function, non-printing image regions which are an upper end part (an upper margin) and a lower end part (a lower margin) in which no printing image is present are generated also in the tape width direction. When such a non-printing image region becomes equal to or greater than a tape width, sometimes the tape part corresponding to the non-printing image region is not used even when it is output from the tape printer and becomes useless.

### SUMMARY

An advantage of some aspects of the invention is to solve at least part of the problems described above, and the invention can be realized as an embodiment or an application example described below.

### Application Example 1

This application example is directed to a tape printer having a large-size printing function of dividing an enlarged printing image which is larger than the tape width of a long tape into a plurality of images, sequentially printing the images on a plurality of tape parts, arranging a plurality of printed labels formed by the printing parallel to each other in a tape width direction, and thereby forming the enlarged printing image, the tape printer including: a tape width detecting section detecting the tape width; a layout calculating section calculating enlargement layout information indicating the layout of a character or graphics forming the enlarged printing image; a margin determining section calculating the widths of an upper margin and a lower margin of the enlarged printing image in the tape width direction based on the enlargement layout information calculated by the layout calculating section and determining whether or not each width is equal to or greater than the tape width; an image data generating section generating image data of the enlarged printing image based on the enlargement layout information; and a printing section sequentially printing, on one or more than one tape part, the image data of the enlarged printing image other than a tape part corresponding to a margin which is equal to or greater than the tape width based on the determination result obtained by the margin determining section.

According to such a tape printer, the tape width detecting section detects the tape width. The layout calculating section calculates enlargement layout information indicating the layout of a character or graphics. The margin determining section determines whether or not each of the widths of the upper margin and the lower margin of the enlarged printing image is equal to or greater than the tape width. The image data generating section generates image data of the enlarged printing image based on the enlargement layout information. The printing section sequentially prints, on one or more than one tape part, the image data of the enlarged printing image other than a tape part corresponding to a margin which is equal to or greater than the tape width. As a result, when the upper margin or the lower margin is equal to or greater than the tape width, a tape part corresponding to the upper margin or the lower margin is not output from the tape printer, making it possible to reduce use of tape. Here, the margin means a non-printing image region in which no printing image is present.

### Application Example 2

This application example is directed to a tape printer having a large-size printing function of dividing an enlarged printing image which is larger than the tape width of a long tape into a plurality of images, sequentially printing the images on a plurality of tape parts, arranging a plurality of printed labels formed by the printing parallel to each other in a tape width direction, and thereby forming the enlarged printing image, the tape printer including: a tape width detecting section detecting the tape width; a first layout calculating section calculating first enlargement layout information indicating the layout of a character or graphics forming the enlarged printing image; a margin determining section calculating the widths of an upper margin and a lower margin of the enlarged printing image in the tape width direction based on the first enlargement layout information calculated by the first layout calculating section and determining whether or not each width is equal to or greater than the tape width; a second layout calculating section calculating second enlargement layout information based on the determination result obtained by the margin determining section, the second enlargement layout information which is the first enlargement layout information from which a printing image part having a tape width, the printing image part corresponding to a margin which is equal to or greater than the tape width, is removed; an image data generating section generating image data of the enlarged printing image based on the second enlargement layout information calculated by the second layout calculating section; and a printing section sequentially printing the image data of the enlarged printing image on one or more than one tape part.

According to such a tape printer, the tape width detecting section detects the tape width. The first layout calculating section calculates first enlargement layout information indicating the layout of a character or graphics. The margin determining section determines whether or not each of the widths of the upper margin and the lower margin of the enlarged printing image is equal to or greater than the tape width based on the first enlargement layout information. The second layout calculating section calculates second enlargement layout information which is the first enlargement layout information from which a printing image part having the tape width, the printing image part corresponding to a margin which is equal to or greater than the tape width, is removed. The image data generating section generates image data of the enlarged printing image based on the second enlargement layout information. The printing section sequentially prints the image data of the enlarged printing image on one or more than one tape part. As a result, when the upper margin or the lower margin is equal to or greater than the tape width, a tape part corresponding to the upper margin or the lower margin is not output from the tape printer. This makes it possible to reduce use of tape.

### Application Example 3

This application example is directed to a method for controlling a tape printer having a large-size printing function of dividing an enlarged printing image which is larger than the tape width of a long tape into a plurality of images, sequentially printing the images on a plurality of tape parts, arranging a plurality of printed labels formed by the printing parallel to each other in a tape width direction, and thereby forming the enlarged printing image, the method including: a tape width detection step of detecting the tape width; a layout calculation step of calculating enlargement layout information indicating the layout of a character or graphics forming the enlarged printing image; a margin determination step of calculating the widths of an upper margin and a lower margin of the enlarged printing image in the tape width direction based on the enlargement layout information calculated in the layout calculation step and determining whether or not each width is equal to or greater than the tape width; an image data generation step of generating image data of the enlarged printing image based on the enlargement layout information; and a printing step of sequentially printing, on one or more than one tape part, the image data of the enlarged printing image other than a tape part corresponding to a margin which is equal to or greater than the tape width based on the determination result obtained in the margin determination step.

According to such a method for controlling a tape printer, when the upper margin or the lower margin is equal to or greater than the tape width, a tape part corresponding to the upper margin or the lower margin is not output from the tape printer. As a result, it is possible to reduce use of tape.

### Application Example 4

This application example is directed to a method for controlling a tape printer having a large-size printing function of dividing an enlarged printing image which is larger than the tape width of a long tape into a plurality of images, sequentially printing the images on a plurality of tape parts, arranging a plurality of printed labels formed by the printing parallel to each other in a tape width direction, and thereby forming the enlarged printing image, the method including: a tape width detection step of detecting the tape width; a first layout calculation step of calculating first enlargement layout information indicating the layout of a character or graphics forming the enlarged printing image; a margin determination step of calculating the widths of an upper margin and a lower margin of the enlarged printing image in the tape width direction based on the first enlargement layout information calculated in the first layout calculation step and determining whether or not each width is equal to or greater than the tape width; a second layout calculation step of calculating second enlargement layout information based on the determination result obtained in the margin determination step, the second enlargement layout information which is the first enlargement layout information from which a printing image part having the tape width, the printing image part corresponding to a margin which is equal to or greater than the tape width, is removed; an image data generation step of generating image data of the enlarged printing image based on the second enlargement layout information calculated in the second layout calculation step; and a printing step of sequentially printing the image data of the enlarged printing image on one or more than one tape part.

According to such a method for controlling a tape printer, when the upper margin or the lower margin is equal to or greater than the tape width, a tape part corresponding to the upper margin or the lower margin is not output from the tape printer. As a result, it is possible to reduce use of tape.

### Application Example 5

This application example is directed to a program product for making a computer execute the steps of the method for controlling a tape printer described in Application Example 3.

By making the computer execute such a program product, when the upper margin or the lower margin is equal to or greater than the tape width, a tape part corresponding to the upper margin or the lower margin is not output from the tape printer. As a result, it is possible to reduce use of tape.

### Application Example 6

This application example is directed to a program product for making a computer execute the steps of the method for controlling a tape printer described in Application Example 4. By making the computer execute such a program product, when the upper margin or the lower margin is equal to or greater than the tape width, a tape part corresponding to the upper margin or the lower margin is not output from the tape printer. As a result, it is possible to reduce use of tape.

In accordance with the above aspects and preferred aspects of the invention, there may be provided a tape printer for printing on a long tape. The tape printer may have a large-size printing function of being configured to divide an enlarged printing image, which has an image width larger than the tape width of the long tape, into two or more images, to sequentially print the two or more images respectively on two or more tape parts of the long tape, to arrange the two or more printed tape parts parallel to each other in a tape width direction, and to thereby form the enlarged printing image from the two or more printed tape parts.

The tape printer may comprise: a tape width detecting section for detecting the tape width of the long tape; a layout determining section for determining enlargement layout information indicating the layout of a character or graphics forming the enlarged printing image; a margin determining section for determining the margin widths of an upper margin and a lower margin of the enlarged printing image in the tape width direction based on the enlargement layout information determined by the layout determining section and for determining, for each of the determined margin widths, whether or not the determined margin width is equal to or greater than the tape width of the long tape; an image data generating section for generating image data of the enlarged printing image based on the enlargement layout information determined by the layout determining section; and a printing section for sequentially printing, on two or more tape parts respectively, the two or more images of the enlarged printing image, wherein the printing section is configured to only print images of the enlarged printing image other than images corresponding to a margin of the enlarged printing image for which it has been determined that the margin width is equal to or greater than the tape width.

Preferably, the layout determining section comprises: a first layout determining section for determining first enlargement layout information indicating the layout of a character or graphics forming the enlarged printing image, wherein the margin determining section is preferably configured to determine the margin widths of the upper margin and the lower margin of the enlarged printing image in the tape width direction based on the first enlargement layout information determined by the first layout determining section; and a second layout determining section for determining second enlargement layout information based on the determination result obtained by the margin determining section, the second enlargement layout information corresponding preferably to the first enlargement layout information from which a printing image part having the tape width of the long tape is removed, the printing image part preferably corresponding to a margin of the enlarged printing image which has a margin width equal to or greater than the tape width of the long tape, wherein the image data generating section is preferably configured to generate image data of the enlarged printing image based on the second enlargement layout information determined by the second layout determining section.

In accordance with the above aspects and preferred aspects of the invention, there may be provided a method for controlling a tape printer for printing on a long tape, the tape printer having a large-size printing function of being configured to divide an enlarged printing image, which has an image with larger than the tape width of the long tape, into two or more images, to sequentially print the two or more images respectively on two or more tape parts of the long tape, to arrange of the two or more printed tape parts parallel to each other in a tape width direction, and to thereby form the enlarged printing image from the two or more printed tape parts.

The method may comprise: a tape width detection step of detecting the tape width of the long tape; a layout determination step of determining enlargement layout information indicating the layout of a character or graphics forming the enlarged printing image; a margin determination step of determining the margin widths of an upper margin and a lower margin of the enlarged printing image in the tape width direction based on the enlargement layout information determined in the layout determination step and determining, for each of the determined margin widths, whether or not the margin width is equal to or greater than the tape width of the long tape; an image data generation step of generating image data of the enlarged printing image based on the enlargement layout information determined in the layout determination step; and a printing step of sequentially printing, on two or more tape parts respectively, the two or more images of the enlarged printing image, wherein in the printing step only images of the enlarged printing image other than images corresponding to a margin of the enlarged printing image for which it has been determined that the margin width is equal to or greater than the tape width are printed.

Preferably, the layout determination step may comprise: a first layout determination step of determining first enlargement layout information indicating the layout of a character or graphics forming the enlarged printing image, wherein the margin widths of the upper margin and the lower margin of the enlarged printing image in the tape width direction are preferably determined based on the first enlargement layout information determined in the first layout determination step; and a second layout determination step of determining second enlargement layout information based on the determination result obtained in the margin determination step, the second enlargement layout information preferably corresponding to the first enlargement layout information from which a printing image part having the tape width of the long tape is removed, the printing image part preferably corresponding to a margin of the enlarges printing image which has a margin width equal to or greater than the tape width of the long tape, wherein image data of the enlarged printing image is preferably generated in the image data generation step based on the second enlargement layout information determined in the second layout determination step.

In accordance with the above aspects and preferred aspects of the invention, a program product for making a computer execute the steps of the method for controlling a tape printer according to one or more of the above-mentioned aspects may be provided.

### BRIEF DESCRIPTION OF THE DRAWINGS

The invention will be described with reference to the accompanying drawings, wherein like numbers reference like elements.

Fig. 1 is a perspective view showing a tape printer of a first embodiment.

Fig. 2 is a perspective view showing the tape printer of the first embodiment.

Fig. 3 is a block diagram showing a circuit configuration of the tape printer.

Figs. 4A to 4C are explanatory diagrams showing the screen of a display section of the tape printer when large-size printing is performed, Fig. 4A being an explanatory diagram showing a character string entry screen, Fig. 4B being an explanatory diagram showing a screen making the user select a magnification, and Fig. 4C being an explanatory diagram showing a screen for making the tape printer perform large-size printing.

Fig. 5 is a flowchart for explaining large-size printing processing.

Figs. 6A and 6B are explanatory diagrams about a printing image, Fig. 6A being an explanatory diagram of a normal printing image, and Fig. 6B being an explanatory diagram of a four-times enlarged printing image.

Figs. 7A to 7C are plan views showing a printed label, Fig. 7A being a plan view of a label on which normal printing is performed, Fig. 7B being a plan view of a label when printing is performed on a tape part corresponding to a margin in large-size printing, and Fig. 7C being a plan view of a label in which printing is not performed on a tape part corresponding to a margin in large-size printing.

Fig. 8 is a flowchart for explaining large-size printing processing according to a second embodiment.

Fig. 9 is an explanatory diagram about an enlarged printing image from which a margin tape part is deleted.

### DESCRIPTION OF EXEMPLARY EMBODIMENTS

Hereinafter, embodiments of the present invention will be described with reference to the accompanying drawings.

### First Embodiment

In a first embodiment, a tape printer which sequentially prints image data of an enlarged printing image other than a tape part corresponding to a margin which is equal to or greater than a tape width at the time of large-size printing will be described.

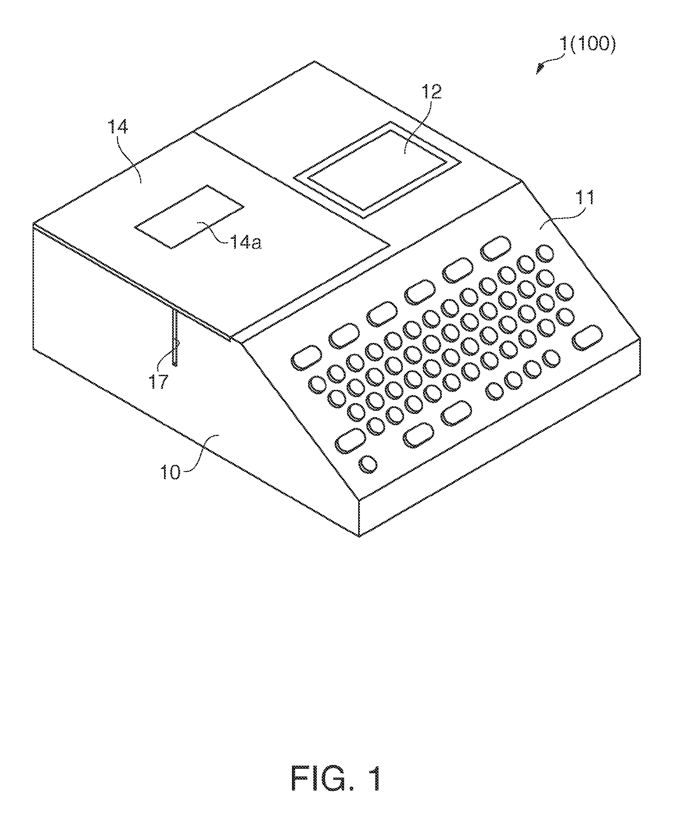

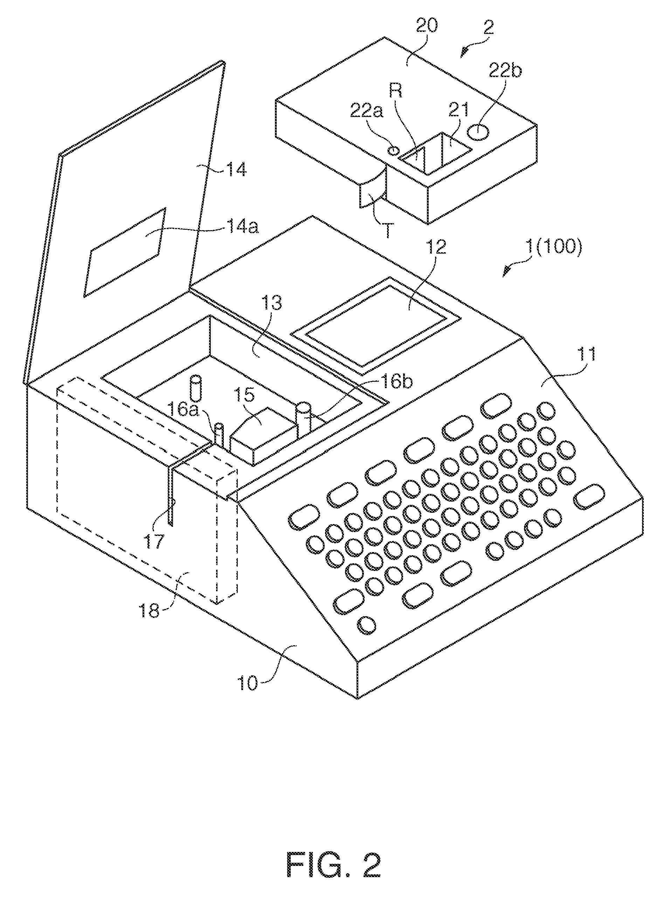

Figs. 1 and 2 are perspective views showing a tape printer of this embodiment.

As shown in Figs. 1 and 2, a tape printer 1 has a structure in which a main body is housed in a cabinet 10, and the cabinet 10 has a keyboard 11 on the front upper face thereof. The keyboard 11 is an entry section which accepts various entry operations, such as an entry of a character string, performed by the user, and has a large number of character keys by which a character string composed of a kana character, a kanji character, an alphabet, a numeric, a symbol, etc. can be entered and a plurality of control keys for giving an instruction of various operations to the tape printer 1. The control keys of the keyboard 11 include a power supply key for switching a power supply on and off, a conversion key for converting entered kana characters into a kanji character, an Enter key for confirming the entered character string or the like, a cursor key used, for example, to move a cursor, a printing key for making the tape printer 1 perform printing, a large-size printing key for making the tape printer 1 perform large-size printing, etc.

The cabinet 10 has a display section 12 on the upper face thereof near the back, the display section 12 formed of a liquid crystal display device and the like. The display section 12 forms an image with a large number of pixels arranged in a matrix, and is used to display a character entered from the keyboard 11 and display a menu screen and a message screen.

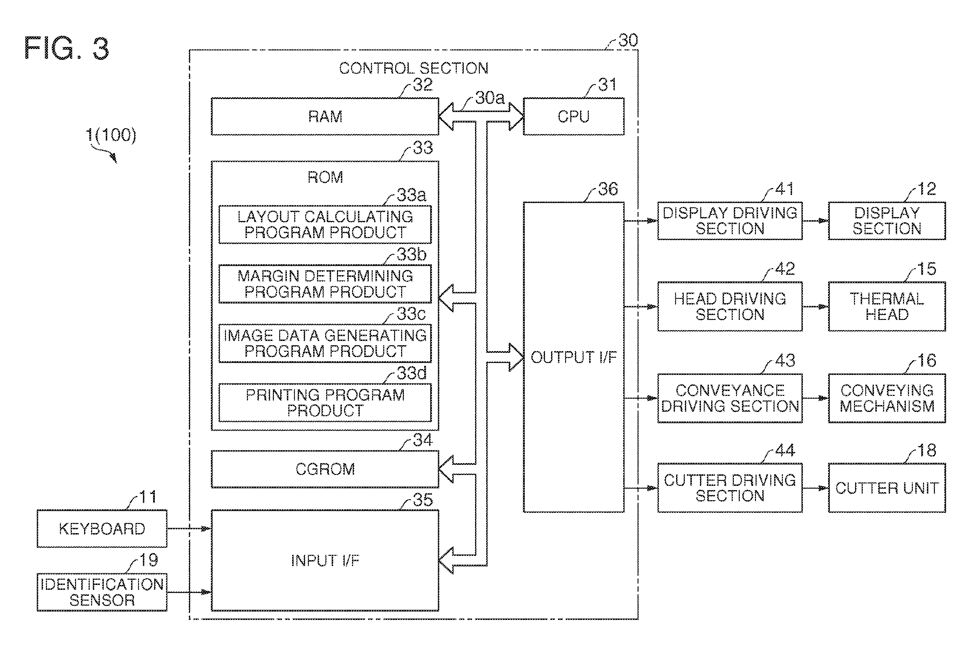

Next to the display section 12, the cabinet 10 has a concave portion 13 formed on the upper face thereof near the back, the concave portion 13 into which a tape cartridge 2 is placed. On the opening of the concave portion 13, an opening and closing lid 14 is provided so as to be openable and closable, and, by bringing the opening and closing lid 14 into an open state, the tape cartridge 2 can be attached and detached. Moreover, the opening and closing lid 14 has a translucent confirmation window 14a, which allows the user to check visually and externally whether or not the tape cartridge 2 is placed in the concave portion 13. At the bottom of the concave portion 13, a thermal head 15 and rotating shafts 16a and 16b forming a conveying mechanism 16 (see Fig. 3) are provided. When the tape cartridge 2 is placed into the concave portion 13, the thermal head 15 fits into a hole-shaped head fit portion 21 provided in the tape cartridge 2, and the rotating shafts 16a and 16b are engaged in hole-shaped driven sections 22a and 22b, respectively.

The tape cartridge 2 has a built-in tape T and a built-in ink ribbon R, of which both are belt-shaped, in a cartridge case 20. The tape T is a printing medium of the tape printer 1, and has a structure in which an adhesive layer is formed on the back of a base material formed of PET (polyethylene terephthalate) or paper material and the adhesive layer is covered with release paper. The tape printer 1 can support two or more types of tape cartridge 2 which differ in width, material (material of the base material), color, etc. of the tape T, and the user can use a tape cartridge 2 according to the use or preference. Incidentally, on the back of the tape cartridge 2, a plurality of holes (not shown) for identifying the built-in tape T are provided, whereby the tape printer 1 can identify the tape type of the tape cartridge 2 placed in the concave portion 13 by an identification sensor 19 (see Fig. 3), such as a microswitch, provided on the bottom of the concave portion 13. Here, the tape type information includes tape width information, and the identification sensor 19 corresponds to a tape width detecting section.

When the tape cartridge 2 is placed into the concave portion 13, the front surface of the tape T faces the thermal head 15 in the head fit portion 21 with the ink ribbon R placed between the front surface of the tape T and the thermal head 15. The thermal head 15 has a large number of heater elements (not shown) formed therein, the heater elements arranged in line in a direction perpendicular to the longitudinal direction (the direction in which the tape T is conveyed) of the tape T, and selectively makes each heater element generate heat, whereby the ink of the ink ribbon R is transferred (thermally transferred) to the front surface of the tape T. That is, a dot is formed on the front surface of the tape T in a position corresponding to the heater element which has generated heat. Here, when the rotating shafts 16a and 16b are driven and rotated, the tape T and the ink ribbon R are conveyed, the tape T is then ejected to the outside of the cartridge case 20, and the ink ribbon R is reeled in in the cartridge case 20. Then, by repeating the above-described thermal transfer while gradually conveying the tape T and the ink ribbon R, an image formed of a plurality of dots is printed on the front surface of the tape T.

In a side face of the cabinet 10, a slit 17 which makes the outside of the cabinet 10 and the concave portion 13 communicate with each other is provided, and the printed tape T ejected from the cartridge case 20 passes through the slit 17, and a predetermined length thereof is conveyed toward the outside of the cabinet 10. Inside the cabinet 10, a cutter unit 18 for cutting the tape T crossing the slit 17 is provided. The printed part of the tape T is cut by the cutter unit 18, and is ejected out of an opening (a tape ejection port) of the slit 17 as a tape piece (a label).

Fig. 3 is a block diagram showing a circuit configuration of the tape printer 1.

As shown in Fig. 3, in addition to the keyboard 11, the display section 12, the thermal head 15, the conveying mechanism 16 including the rotating shafts 16a and 16b (see Fig. 2), the cutter unit 18, and the identification sensor 19 which have been described above, the tape printer 1 includes a control section 30 which performs centralized control of the operation of the tape printer 1, a display driving section 41 which makes the display section 12 display an image, a head driving section 42 which drives the thermal head 15 and makes the thermal head 15 generate heat, a conveyance driving section 43 which drives the conveying mechanism 16, a cutter driving section 44 which drives the cutter unit 18, etc.

The control section 30 functions as a computer, and has a CPU (central processing unit) 31, RAM (random access memory) 32, ROM (read only memory) 33, CGROM (character generator ROM) 34, an input interface (I/F) 35, an output interface (I/F) 36, and the like, which are connected to each other via a bus 30a.

The CPU 31 operates in accordance with a control program product stored in the ROM 33, and controls various operations of the whole of the tape printer 1.

The RAM 32 is a storage section formed of volatile memory, and temporarily stores various processing results of the CPU 31, a character code string entered from the keyboard 11, display image data to be displayed by the display section 12, printing image data to be printed by the thermal head 15, etc. Furthermore, the RAM 32 also stores various flags and the like. Moreover, the RAM 32 also stores document data and the like which are formed of a character code string. Incidentally, the document data and the like may be stored in flash memory or the like which is nonvolatile memory.

The ROM 33 and the CGROM 34 are storage sections formed of nonvolatile memory such as mask ROM or flash memory, and the ROM 33 stores the above-described control program product, various data, and the like. Moreover, the ROM 33 stores a layout calculating program product 33a which calculates layout information indicating the layout of a printing image of characters and graphics based on a character code string and a margin determining program product 33b which calculates the widths of an upper margin and a lower margin of a printing image in the tape width direction based on the layout information of an enlarged printing image at the time of large-size printing and determines whether or not each width is equal to or greater than a tape width. In addition, the ROM 33 stores an image data generating program product 33c which generates image data of a printing image or an enlarged printing image based on the layout information and a printing program product 33d which prints the image data of the printing image or the enlarged printing image on the tape T.

The CGROM 34 stores font data of characters which can be printed by the tape printer 1. The font data is data in the bit map format, the data for generating a character to be printed by the thermal head 15 and a character to be displayed by the display section 12. The font data in the bit map format is formed of a large number of dots, and each dot corresponds to the heater element of the thermal head 15 and the pixel of the display section 12. The CGROM 34 stores font data of a plurality of fonts, and the CPU 31 acquires corresponding font data from the CGROM 34 by specifying a font type, a character size, and a character code, and generates display image data and printing image data by using this font data. Incidentally, as the font data, font data in an outline format, which is easily related to various character sizes, may be used.

To the input interface 35, the keyboard 11 and the identification sensor 19 are connected. When the keyboard 11 is operated by the user, the keyboard 11 accepts this operation, and outputs key information corresponding to the operated key to the CPU 31 via the input interface 35. Moreover, the identification sensor 19 outputs identification information (including tape width information) according to the tape type of the tape cartridge 2 placed in the concave portion 13 to the CPU 31 via the input interface 35.

To the output interface 36, the display driving section 41, the head driving section 42, the conveyance driving section 43, and the cutter driving section 44 are connected, and these sections drive the display section 12, the thermal head 15, the conveying mechanism 16, and the cutter unit 18, respectively, based on the control from the CPU 31.

In the tape printer 1 configured as described above, when the power supply key is operated by the user, the tape printer 1 starts operating, whereby characters can be entered by means of the character keys, and various instructions can be given by means of the control keys.

Here, when a character is entered as a result of the character key being operated by the user, the keyboard 11 accepts this entry, and outputs key information to the control section 30. Based on the key information input from the keyboard 11, the control section 30 identifies a character code of the entered character, and stores the character code in the RAM 32. Then, the control section 30 acquires font data corresponding to the character code from the CGROM 34, and generates display image data by using the font data thus acquired. When the control section 30 supplies the display image data to the display driving section 41, the entered character is displayed on the display section 12. Then, when the user repeats an entry of a character multiple times, a character code string (text data) including a plurality of character codes is stored in the RAM 32, and a character string formed of a plurality of characters is displayed on the display section 12.

When the printing key is operated by the user after the character (the character string) is entered, the tape printer 1 performs printing processing.

Here, the tape printer 1 of this embodiment can divide a printing image (an enlarged printing image) which is larger than the tape width of the tape T into a plurality of images and sequentially print the images on a plurality of tape parts, and can perform "large-size printing" by which an enlarged printing image is formed by arranging a plurality of printed labels, which are formed by printing, parallel to each other in the tape width direction.

Next, large-size printing will be described. First, operation and screen display performed at the time of large-size printing will be described.

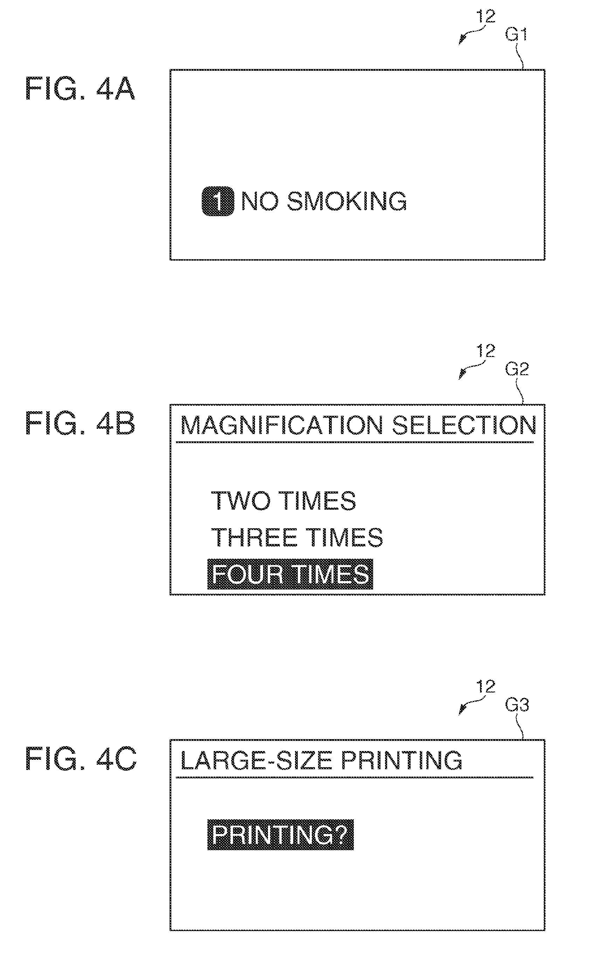

Figs. 4A to 4C are explanatory diagrams showing the screen of the display section 12 of the tape printer 1 when large-size printing is performed, Fig. 4A is an explanatory diagram showing a character string entry screen, Fig. 4B is an explanatory diagram showing a screen making the user select a magnification, and Fig. 4C is an explanatory diagram showing a screen making the tape printer 1 perform large-size printing.

Fig. 4A is a character string entry screen G1 making the user enter a character string. On the character string entry screen G1, a sign representing a line number and a character string entered by the user are displayed. When the large-size printing key of the keyboard 11 is pressed in the character string entry screen G1, a magnification selection screen making the user select a magnification in large-size printing is displayed.

Fig. 4B is a magnification selection screen G2. In the uppermost part of the magnification selection screen G2, the character string of "MAGNIFICATION SELECTION" indicating that this screen is a magnification selection screen is displayed. Under that character string, the character strings of "TWO TIMES", "THREE TIMES", and "FOUR TIMES" are displayed in this order. The user can select any one of "TWO TIMES", "THREE TIMES", and "FOUR TIMES" by pressing the cursor key of the keyboard 11 and then pressing the Enter key. The selected magnification is stored in the RAM 32. Incidentally, an option which is currently selected is displayed in a black-and-white highlighted character.

When the magnification is selected in the magnification selection screen G2, a large-size printing confirmation screen is displayed.

Fig. 4C is an explanatory diagram showing a large-size printing confirmation screen G3. In the uppermost part of the large-size printing confirmation screen G3, the character string of "LARGE-SIZE PRINTING" indicating that this is a large-size printing confirmation screen is displayed. Under that character string, the character string of "PRINTING?" is highlighted in black and white. The user can perform large-size printing by pressing the Enter key of the keyboard 11.

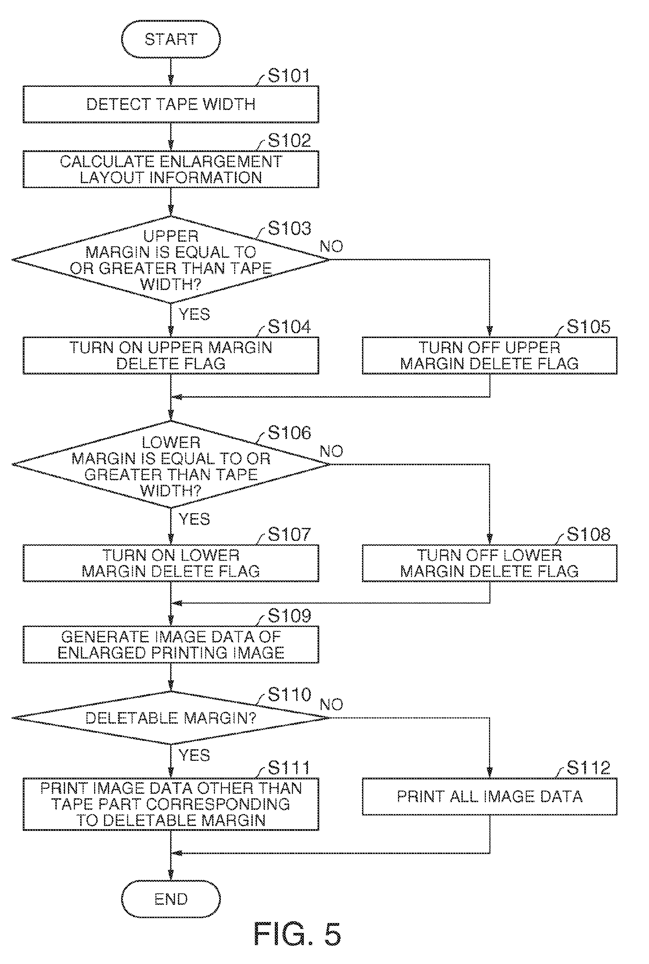

When large-size printing is performed by the user in the large-size printing confirmation screen G3, the tape printer 1 performs large-size printing processing (a flowchart) shown in Fig. 5.

Fig. 5 is a flowchart for explaining large-size printing processing. The large-size printing processing will be described by using Fig. 5.

When large-size printing is performed by the user, the control section 30 detects the tape width of the tape cartridge 2 placed in the concave portion 13 based on the information from the identification sensor 19 (step S101). Then, the control section 30 calculates enlargement layout information by executing the layout calculating program product 33a (step S102). Specifically, the control section 30 calculates the layout coordinates of the character or graphics in an enlarged printing image based on the tape width, the magnification, the setting information on the entered character or graphics and the size thereof, the setting information on the decoration of the character or graphics, etc. The control section 30 here corresponds to a layout calculating section.

Next, the control section 30 determines whether or not an upper margin of the enlarged printing image in the tape width direction is equal to or greater than the tape width by executing the margin determining program product 33b (step S103).

Here, a margin and a tape width in an enlarged printing image will be described.

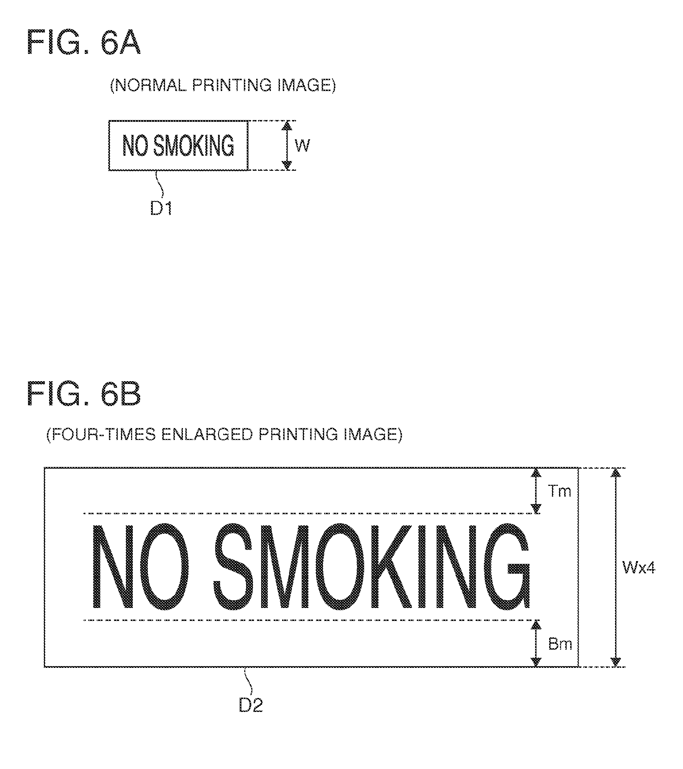

Figs. 6A and 6B are explanatory diagrams about a printing image, Fig. 6A is an explanatory diagram of a normal printing image, and Fig. 6B is an explanatory diagram of a four-times enlarged printing image.

As shown in Fig. 6A, in a normal printing image (that is, a printing image which is not enlarged) D1, the width of the printing image represents a tape width W. In actuality, the tape width W is represented by the number of dots.

As shown in Fig. 6B, in a four-times enlarged printing image D2, the width of the enlarged printing image is four times the tape width W. In addition, an upper margin Tm represents a margin located above the character, that is, a non-printing image region in which a dot to be printed is not present. A lower margin Bm represents a margin located under the character. Incidentally, when an outer frame or the like for decorating the character is located above and under the character, the upper margin Tm and the lower margin Bm represent upper and lower margins of the outer frame. The upper margin Tm and the lower margin Bm can be calculated as the number of dots from the layout coordinates of the character or graphics, the layout coordinates included in the enlargement layout information. The margin determining program product 33b determines whether or not the upper margin Tm or the lower margin Bm is equal to or greater than the tape width W.

Back in Fig. 5, if the upper margin Tm of the enlarged printing image is equal to or greater than the tape width W (step S103: YES), the control section 30 turns on an upper margin delete flag (step S104). If the upper margin Tm of the enlarged printing image is not equal to or greater than the tape width W, that is, if the upper margin Tm of the enlarged printing image is smaller than the tape width W (step S103: NO), the control section 30 turns off the upper margin delete flag (step S105). Here, the upper margin delete flag is a flag which is stored in the RAM 32.

Next, the control section 30 determines whether or not the lower margin Bm of the enlarged printing image in the tape width direction is equal to or greater than the tape width W by executing the margin determining program product 33b (step S106). If the lower margin Bm of the enlarged printing image is equal to or greater than the tape width W (step S106: YES), the control section 30 turns on a lower margin delete flag (step S107). If the lower margin Bm of the enlarged printing image is not equal to or greater than the tape width W, that is, the lower margin Bm of the enlarged printing image is smaller than the tape width W (step S106: NO), the control section 30 turns off the lower margin delete flag (step S108). Here, the lower margin delete flag is a flag which is stored in the RAM 32. As described above, the control section 30 which calculates the upper margin Tm and the lower margin Bm and determines whether or not the upper margin Tm and the lower margin Bm are equal to or greater than the tape width W corresponds to a margin determining section.

The control section 30 generates image data of the enlarged printing image by executing the image data generating program product 33c (step S109). Specifically, the control section 30 generates the image data by acquiring font data of the character, graphics, and the like, from the CGROM 34, and arranging the font data on the layout coordinates based on the enlargement layout information. At this time, the image data of the enlarged printing image also includes the upper margin Tm and the lower margin Bm. The control section 30 here corresponds to an image data generating section.

The control section 30 checks the upper margin delete flag and the lower margin delete flag, and determines whether or not there is a deletable margin (step S110). If there is a deletable margin (step S110: YES), the control section 30 executes the printing program product 33d, and sequentially prints the image data of the enlarged printing image on the tape T other than the tape part corresponding to the deletable margin (step S111). Specifically, the control section 30 prints the image data of the enlarged printing image from the upper side in the tape width direction while not performing printing on a part having the tape width, the part corresponding to the deletable margin. Then, the control section 30 makes the head driving section 42 and the conveyance driving section 43 drive the thermal head 15 and the conveying mechanism 16, respectively, and thereby makes them print an image according to the image data on the tape T. After that, when the control section 30 makes the cutter driving section 44 drive the cutter unit 18, the tape T is cut. The above operations are performed sequentially. The control section 30, the head driving section 42, the conveyance driving section 43, the thermal head 15, and the conveying mechanism 16 here correspond to a printing section. Then, the control section 30 ends the large-size printing processing.

If there is no deletable margin (step S110: NO), the control section 30 sequentially prints all the image data of the enlarged printing image on the tape T (step S112). Then, the control section 30 ends the large-size printing processing.

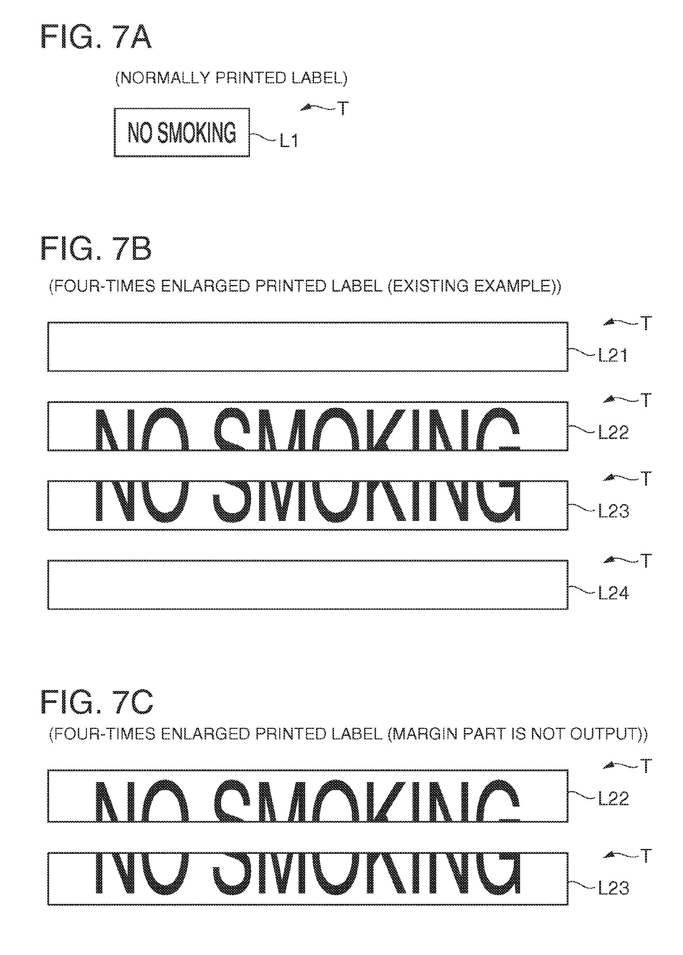

Here, a printed label formed by printing performed by the tape printer 1 will be described. Figs. 7A to 7C are plan views showing a printed label, Fig. 7A is a plan view of a label on which normal printing is performed, Fig. 7B is a plan view of a label when printing is performed on a tape part corresponding to a margin in large-size printing, and Fig. 7C is a plan view of a label in which printing is not performed on a tape part corresponding to a margin in large-size printing.

As shown in Fig. 7A, a normally printed label L1 on which printing is performed in normal printing is one label printed based on the normal printing image D1 shown in Fig. 6A. On the other hand, Fig. 7B shows a four-times enlarged printed label (tape parts L21, L22, L23, and L24) obtained by an existing tape printer as a result of large-size printing being performed with a magnification set at four times. As shown in Fig. 7B, the tape part L21 corresponds to the upper margin Tm, the tape part L24 corresponds to the lower margin Bm, and a dot to be printed is not present in either parts. As a result, the tape part L21 and the tape part L24 are sometimes not used by the user even if these parts are subjected to printing and then output.

With the tape printer 1 of this embodiment, as shown in Fig. 7C, the tape part L21 and the tape part L24 are not subjected to printing or output, and only the tape part L22 and the tape part L23 can be subjected to printing and then output.

According to the first embodiment described above, the following effects can be obtained.

(1) The tape printer 1 sequentially prints the image data of an enlarged printing image other than a tape part corresponding to a margin which is equal to or greater than the tape width W. As a result, since the tape part corresponding to the upper margin Tm or the lower margin Bm is not subjected to printing or output when the upper margin Tm or the lower margin Bm is equal to or greater than the tape width W, it is possible to reduce use of the tape T in large-size printing.

(2) In the tape printer 1, when a tape cartridge 2 with a narrow tape width W is used in large-size printing, there is a high possibility that the upper margin Tm or the lower margin Bm becomes equal to or greater than the tape width W. Therefore, when a tape cartridge 2 with a narrow tape width W is used, the effectiveness of reduction of use of the tape T is enhanced. That is, it is possible to reduce use of the tape T when large-size printing is performed by using a tape cartridge 2 with a limited width.

(3) In the tape printer 1, when large-size printing of a character or graphics which is small relative to the tape width W is performed, there is a high possibility that the upper margin Tm or the lower margin Bm becomes equal to or greater than the tape width W. Therefore, the effectiveness of reduction of use of the tape T is enhanced.

### Second Embodiment

Hereinafter, a second embodiment will be described.

In the second embodiment, a tape printer 100 generating image data of an enlarged printing image which does not include a tape part corresponding to a margin which is equal to or greater than a tape width W at the time of large-size printing will be described.

The appearance and mechanism of the tape printer 100 according to the second embodiment are the same as those of the tape printer 1 according to the first embodiment, and therefore descriptions thereof will be omitted. Moreover, a block diagram showing a circuit configuration of the tape printer 100 according to the second embodiment is also the same as that of the tape printer 1 according to the first embodiment, and therefore descriptions thereof will be omitted. Furthermore, the operation and screen display of the tape printer 100 according to the second embodiment, the operation and screen display performed at the time of large-size printing, are also the same as those of the tape printer 1 according to the first embodiment, and therefore descriptions thereof will be omitted.

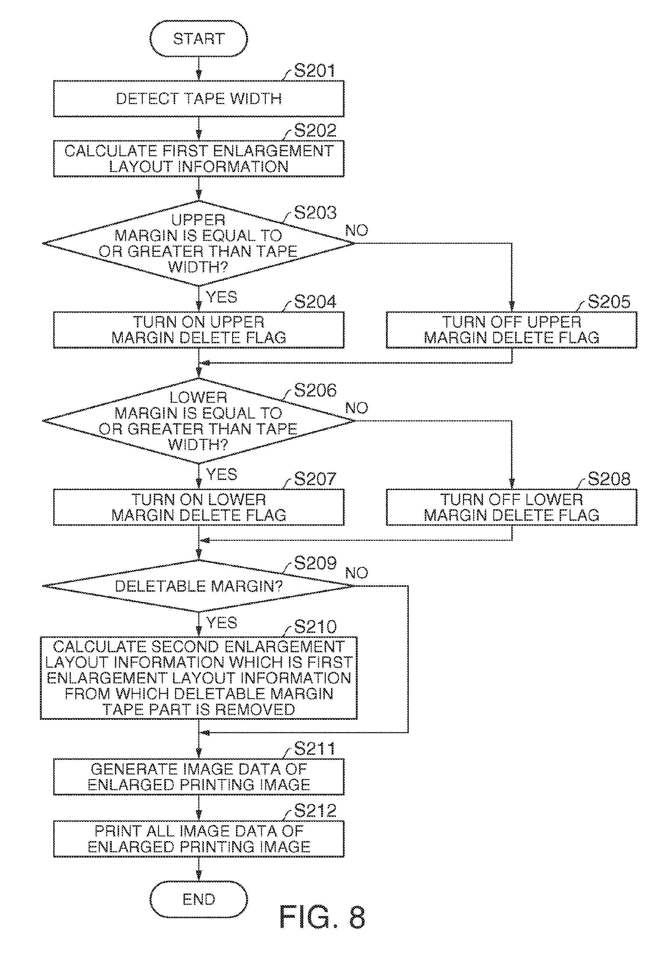

Next, large-size printing processing in the tape printer 100 according to the second embodiment will be described. As is the case with the first embodiment, when large-size printing is performed by the user in the large-size printing confirmation screen G3, the tape printer 100 performs large-size printing processing (a flowchart) shown in Fig. 8.

Fig. 8 is a flowchart for explaining the large-size printing processing according to the second embodiment. The large-size printing processing will be described by using Fig. 8.

When large-size printing is performed by the user, the control section 30 detects the tape width of the tape cartridge 2 placed in the concave portion 13 based on the information from the identification sensor 19 (step S201). Then, the control section 30 calculates first enlargement layout information by executing the layout calculating program product 33a (step S202). Specifically, the control section 30 calculates the layout coordinates of the character or graphics in an enlarged printing image based on the tape width, the magnification, the setting information on the entered character or graphics and the size thereof, the setting information on the decoration of the character or graphics, etc. The control section 30 here corresponds to a first layout calculating section.

Next, the control section 30 determines whether or not the upper margin Tm of the enlarged printing image in the tape width direction is equal to or greater than the tape width W by executing the margin determining program product 33b (step S203). Here, the determination processing executed by the margin determining program product 33b, the processing as to whether or not the upper margin Tm or the lower margin Bm is equal to or greater than the tape width W, is the same as that of the first embodiment.

If the upper margin Tm of the enlarged printing image is equal to or greater than the tape width W (step S203: YES), the control section 30 turns on an upper margin delete flag (step S204). If the upper margin Tm of the enlarged printing image is not equal to or greater than the tape width W, that is, if the upper margin Tm of the enlarged printing image is smaller than the tape width W (step S203: NO), the control section 30 turns off the upper margin delete flag (step S205).

Next, the control section 30 determines whether or not the lower margin Bm of the enlarged printing image in the tape width direction is equal to or greater than the tape width W by executing the margin determining program product 33b (step S206). If the lower margin Bm of the enlarged printing image is equal to or greater than the tape width W (step S206: YES), the control section 30 turns on a lower margin delete flag (step S207). If the lower margin Bm of the enlarged printing image is not equal to or greater than the tape width W, that is, if the lower margin Bm of the enlarged printing image is smaller than the tape width W (step S206: NO), the control section 30 turns off a lower margin delete flag (step S208). As described above, the control section 30 which calculates the upper margin Tm and the lower margin Bm and determines whether or not the upper margin Tm and the lower margin Bm are equal to or greater than the tape width W corresponds to the margin determining section.

The control section 30 checks the upper margin delete flag and the lower margin delete flag, and determines whether or not there is a deletable margin (step S209). If there is a deletable margin (step S209: YES), the control section 30 calculates, by executing the layout calculating program product 33a, second enlargement layout information which is the first enlargement layout information from which the tape part corresponding to the deletable margin is removed (S210). Specifically, the control section 30 calculates the enlargement layout information which is the first enlargement layout information from which the tape width W of the tape part corresponding to the deletable upper margin Tm and the tape width W of the tape part corresponding to the deletable lower margin Bm are deleted. The control section 30 here corresponds to a second layout calculating section.

If there is no deletable margin (step S209: NO), the control section 30 does not perform processing in step S210.

Next, the control section 30 generates image data of the enlarged printing image by executing the image data generating program product 33c (step S211). At this time, if the second enlargement layout information has been calculated, the control section 30 generates image data of the enlarged printing image based on the second enlargement layout information, and, if the second enlargement layout information has not been calculated, the control section 30 generates image data of the enlarged printing image based on the first enlargement layout information. The control section 30 here corresponds to the image data generating section.

Here, image data of an enlarged printing image, the image data generated when the tape width W of the tape part corresponding to the upper margin Tm and the tape width W of the tape part corresponding to the lower margin Bm can be deleted, will be described.

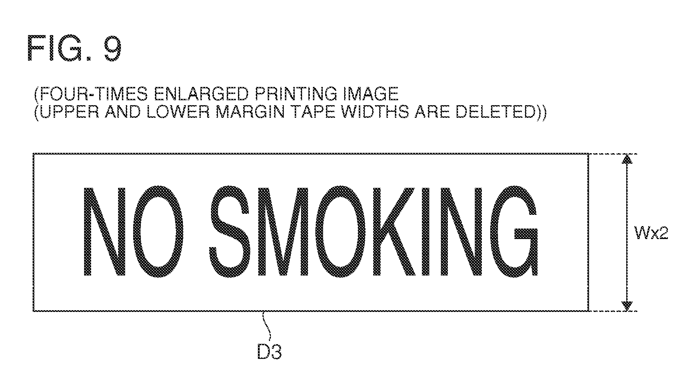

Fig. 9 is an explanatory diagram about an enlarged printing image from which a margin tape part is deleted. As shown in Fig. 9, although a four-times enlarged printing image D3 is a four-times enlarged printing image, the width of the enlarged printing image is twice the tape width W because the tape width W of the tape part corresponding to the upper margin Tm and the tape width W of the tape part corresponding to the lower margin Bm are deleted.

Back in Fig. 8, the control section 30 sequentially prints all the image data of the enlarged printing image by executing the printing program product 33d (step S212). The control section 30, the head driving section 42, the conveyance driving section 43, the thermal head 15, and the conveying mechanism 16 at the time of printing correspond to the printing section. Here, as shown in Fig. 9, when the tape width W of the tape part corresponding to the upper margin Tm and the tape width W of the tape part corresponding to the lower margin Bm can be deleted, there are two printed labels. Then, the control section 30 ends the large-size printing processing.

As is the case with Fig. 7C, the printed labels formed by printing performed by the tape printer 100 are only the tape part L22 and the tape part L23.

According to the second embodiment described above, the effects similar to the effects (2) and (3) of the first embodiment can be obtained. In addition to these effects, the following effects can be obtained.

(1) The tape printer 100 generates image data of an enlarged printing image which does not include a printing image having a tape width, the printing image corresponding to a margin which is equal to or greater than the tape width W. Then, the tape printer 100 sequentially prints the image data of the enlarged printing image. As a result, when the upper margin Tm or the lower margin Bm is equal to or greater than the tape width W, the tape part corresponding to the upper margin Tm or the lower margin Bm is not printed or output. This makes it possible to reduce use of the tape T in large-size printing. Moreover, it is possible to reduce the memory usage at the time of generation of the image data of the enlarged printing image.

Moreover, the embodiments described above can be configured as a recording medium etc. which records the program product for realizing the above functions in such a way that the program product can be read by the computer. As the recording medium, various media that can be read by the computer, the media such as a flexible disk and a hard disk, an optical disk such a CD and a DVD, a magneto-optical disk, a memory card and USB memory which incorporate nonvolatile semiconductor memory, and internal memory (semiconductor memory such as RAM and ROM) of an image generating apparatus, can be used.

The invention is not limited in any way by the embodiments thereof described above, and many variations and modifications are possible. Modified examples will be described below.

### Modified Example 1

The embodiments described above deal with a case in which, when the upper margin Tm and the lower margin Bm at the time of large-size printing are equal to or greater than the tape width W, printing is performed by deleting one upper tape part and one lower tape part. However, when the upper margin Tm or the lower margin Bm is n times (n ≥ 1) the tape width W, printing may be performed by deleting n upper tape part and n lower tape part. By doing so, use of the tape T can be further reduced.

### Modified Example 2

In the embodiments described above, magnification options which can be selected in large-size printing are "TWO TIMES", "THREE TIMES", and "FOUR TIMES". However, other magnification options may be provided.

### Modified Example 3

In the embodiments described above, as a printing method for printing a character etc. on the tape T, a thermal transfer method by the thermal head 15 is used; however, the invention is not limited thereto. Other printing methods such as an ink-jet method by which an ink drop is discharged may be used.

Features, components and specific details of the structures of the above-described embodiments, modified examples and application examples may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A tape printer for printing on a long tape, the tape printer having a large-size printing function of being configured to divide an enlarged printing image, which has an image width larger than the tape width of the long tape, into two or more images, to sequentially print the two or more images respectively on tape parts of the long tape, to arrange the printed tape parts parallel to each other in a tape width direction, and to thereby form the enlarged printing image from the printed tape parts,
the tape printer (1) comprising:
a tape width detecting section (19) for detecting the tape width (W) of the long tape;
a layout determining section (30) for determining enlargement layout information indicating the layout of a character or graphics forming the enlarged printing image;
a margin determining section (30) for determining the margin widths of an upper margin (Tm) and a lower margin (Bm) of the enlarged printing image in the tape width direction based on the enlargement layout information determined by the layout determining section (30) and for determining, for each of the determined margin widths, whether or not the determined margin width is equal to or greater than the tape width (W) of the long tape;
an image data generating section (30) for generating image data of the enlarged printing image based on the enlargement layout information determined by the layout determining section (30); and
a printing section (30, 42, 43, 15, 16) for sequentially printing, on one or more tape parts respectively, at least one of the two or more images of the enlarged printing image, wherein the printing section (30, 42, 43, 15, 16) is configured to only print images of the enlarged printing image other than images corresponding to a margin of the enlarged printing image for which it has been determined that the margin width is equal to or greater than the tape width (W).

2. A tape printer according to claim 1, wherein
the layout determining section (30) comprises:
a first layout determining section (30) for determining first enlargement layout information indicating the layout of a character or graphics forming the enlarged printing image, wherein the margin determining section (30) is configured to determine the margin widths of the upper margin (Tm) and the lower margin (Bm) of the enlarged printing image in the tape width direction based on the first enlargement layout information determined by the first layout determining section (30); and
a second layout determining section (30) for determining second enlargement layout information based on the determination result obtained by the margin determining section (30), the second enlargement layout information corresponding to the first enlargement layout information from which a printing image part having the tape width (W) of the long tape is removed, the printing image part corresponding to a margin of the enlarged printing image which has a margin width equal to or greater than the tape width (W) of the long tape, wherein the image data generating section (30) is configured to generate image data of the enlarged printing image based on the second enlargement layout information determined by the second layout determining section (30).

3. The tape printer according to claim 1, wherein
the printing section is configured to sequentially print one or more images of the enlarged printing image other than images corresponding to a margin which is equal to or greater than n times the tape width, wherein n is an integer of one or more, in case that the margin determining section determines that the margin width of the margin is equal to or greater than n times the tape width.

4. A method for controlling a tape printer for printing on a long tape, the tape printer having a large-size printing function of being configured to divide an enlarged printing image, which has an image with larger than the tape width of the long tape, into two or more images, to sequentially print the two or more images respectively on tape parts of the long tape, to arrange the printed tape parts parallel to each other in a tape width direction, and to thereby form the enlarged printing image from the printed tape parts,
the method comprising:
a tape width detection step of detecting the tape width (W) of the long tape;
a layout determination step of determining enlargement layout information indicating the layout of a character or graphics forming the enlarged printing image;
a margin determination step of determining the margin widths of an upper margin (Tm) and a lower margin (Bm) of the enlarged printing image in the tape width direction based on the enlargement layout information determined in the layout determination step and determining, for each of the determined margin widths, whether or not the margin width is equal to or greater than the tape width (W) of the long tape;
an image data generation step of generating image data of the enlarged printing image based on the enlargement layout information determined in the layout determination step; and
a printing step of sequentially printing, on one or more tape parts respectively, at least one of the two or more images of the enlarged printing image, wherein in the printing step only images of the enlarged printing image other than images corresponding to a margin of the enlarged printing image for which it has been determined that the margin width is equal to or greater than the tape width (W) are printed.

5. A method according to claim 4, wherein the layout determination step comprises:
a first layout determination step of determining first enlargement layout information indicating the layout of a character or graphics forming the enlarged printing image, wherein the margin widths of the upper margin (Tm) and the lower margin (Bm) of the enlarged printing image in the tape width direction are determined based on the first enlargement layout information determined in the first layout determination step; and
a second layout determination step of determining second enlargement layout information based on the determination result obtained in the margin determination step, the second enlargement layout information corresponding to the first enlargement layout information from which a printing image part having the tape width (W) of the long tape is removed, the printing image part corresponding to a margin of the enlarges printing image which has a margin width equal to or greater than the tape width (W) of the long tape, wherein image data of the enlarged printing image is generated in the image data generation step based on the second enlargement layout information determined in the second layout determination step.

6. A program product for making a computer execute the steps of the method for controlling a tape printer according to claim 4 or 5.
